# FASCICULE DE BREVET EUROPEEN

(11) **EP 3 973 202 B1**
(45) Date de publication et mention de la délivrance du brevet: **28.06.2023**
(21) Numéro de dépôt: 20737515.5
(22) Date de dépôt: 15.05.2020
(51) Int. Cl.: F16C 17/24, F16C 33/10

(54) **ORGANE DE GUIDAGE D'UN ELEMENT MOBILE EN OSCILLATION OU ROTATION**
ELEMENT ZUR FÜHRUNG EINES BEWEGLICHEN ELEMENTS IN SCHWINGUNG ODER ROTATION
MEMBER FOR GUIDING A MOBILE ELEMENT IN OSCILLATION OR ROTATION

(30) Priorité: 22.05.2019 FR 1905386
(43) Date de publication de la demande: 30.03.2022
(73) Titulaire: HYDROMECANIQUE ET FROTTEMENT, 42160 Andrézieux-Bouthéon (FR)
(72) Inventeur: PROST, Fabrice, 42000 SAINT-ETIENNE (FR); PAVALLIER, Pierrick, 42120 PERREUX (FR)
(74) Mandataire: Cabinet Laurent & Charras
(86) Numéro de dépôt international: PCT/FR2020/050818
(87) Numéro de publication internationale: WO 2020/234533

(56) Documents cités:
- EP-A2- 2 375 091
- WO-A1-2006/111661
- WO-A1-2014/091123
- FR-A1- 2 882 406
- GB-A- 2 446 245

## Description

### DOMAINE TECHNIQUE

La présente invention concerne un organe de guidage d'un élément mobile en oscillation ou rotation. L'invention concerne également un système mécanique comprenant un tel organe, et un procédé de fabrication d'un tel organe.

Le domaine de l'invention est celui des organes de guidage assurant une fonction de guidage en oscillation ou en rotation, en mouvement continu ou alternatif.

### ART ANTERIEUR

De manière classique, un tel organe de guidage est constitué par une bague, conçue pour le montage avec capacité d'articulation d'un élément tel qu'un axe ou un arbre.

En pratique, de tels systèmes mécaniques sont soumis à d'importantes sollicitations en service : pression élevée, corrosion, abrasion, chocs. Pour améliorer leur durée de vie, un graissage est prévu entre la bague et l'axe.

La bague peut être munie d'agencements faisant office de réserve de graisse, comme décrit par exemple dans les documents WO2014091123 et WO2014091124 au nom de la Demanderesse, ou dans le document EP 2 375 091 correspondant au préambule de la revendication 1.

Lorsque le système mécanique est en service, la graisse sort progressivement des agencements pour venir lubrifier l'interface de frottement entre la bague et l'axe. Ainsi, les agencements permettent de réaliser un graissage uniquement au montage, ou bien avec des espacements temporels de graissage très importants.

Les bagues en bronze, composites et polymères présentent l'avantage de pouvoir s'accommoder à la géométrie de l'axe lorsqu'elles sont soumises à des charges importantes, et ainsi diminuer les pressions normales. La diminution du facteur PV (Pression x Vitesse) entraine alors une diminution de l'usure. En revanche, leur faible dureté de surface entraine une faible résistance à l'usure abrasive.

Ainsi, pour les bagues soumises à des charges élevées et à une forte abrasion, il est d'usage d'utiliser des aciers avec des propriétés mécaniques importantes (limite élastique en traction Re > 800 MPa) et des duretés élevées. Ces aciers sont traités thermiquement et présentent une structure bainitique ou martensitique. Cependant, en raison de leurs propriétés mécaniques importantes, ces bagues ne peuvent pas s'accommoder aux flexions de l'axe, ce qui entraîne des facteurs PV localisés très importants, et par conséquent de l'usure puis du grippage.

La Demanderesse dispose d'une grande expertise dans le domaine des organes de guidage, et cherche continuellement à améliorer les systèmes existants.

### EXPOSE DE L'INVENTION

Le but de la présente invention est de proposer un organe de guidage amélioré, présentant une excellente résistance à l'usure et au grippage, et une durée de vie importante en service.

A cet effet, l'invention a pour objet un organe de guidage d'un élément mobile en oscillation ou rotation, comprenant un corps constitué d'un matériau métallique avec traitement de durcissement, muni d'un alésage pour le montage de l'élément mobile, comportant des cavités réparties de manière discontinue dans l'alésage et aptes à faire office de réserve de graisse, et comportant d'éventuels moyens d'alimentation en graisse ; dans l'alésage étant définies une surface portante hors des cavités et des moyens d'alimentation, et une surface non portante dans les cavités et les moyens d'alimentation ; caractérisé en ce que l'alésage comprend au moins une zone avec des cavités ayant une profondeur comprise entre 2 et 5 mm, et une quantité de graisse dans les cavités par surface portante comprise entre 0,05 et 0,3 g / cm2.

Ainsi, l'invention permet de proposer un organe de guidage résistant, performant et simple à mettre en oeuvre. Cet organe est particulièrement bien adapté aux systèmes mécaniques fonctionnant sous fortes charges et soumis aux chocs en environnement abrasif, comme les articulations équipant les engins de travaux public, miniers, agricoles ou industriels (par exemple secteur sidérurgique).

Selon d'autres caractéristiques avantageuses de l'invention, prises isolément ou en combinaison :
- La quantité de graisse par surface portante est comprise entre 0,05 et 0,2 g / cm2.
- La profondeur des cavités est comprise entre 3 et 5 mm, de préférence égale à 4 mm.
- Le corps a une épaisseur radiale supérieure à 5 mm, de préférence supérieure à 6 mm.
- Le matériau métallique du corps présente une limite élastique Re comprise entre 200 et 600 MPa.
- Le matériau métallique du corps est de l'acier.
- Les moyens d'alimentation en graisse comprennent au moins un orifice traversant entre la surface externe et l'alésage du corps.
- Les moyens d'alimentation en graisse comprennent au moins une gorge annulaire formée dans l'alésage.
- Les moyens d'alimentation en graisse comprennent au moins une gorge annulaire formée sur la surface externe du corps.
- Le corps est dépourvu de gorge sur sa surface externe, notamment lorsqu'une gorge annulaire est formée dans l'alésage.
- La graisse a une densité (ISO2811) comprise de préférence entre 0,85 et 1,05 g/cm3, par exemple égale à 0,9 g/cm3.
- A titre d'exemples non limitatifs, la graisse peut être choisie parmi les références "SNR Lub EP2", "BP energrease LS EP2" et "Tutela grease MRM2".
- L'alésage est de préférence cylindrique.
- L'alésage comporte un revêtement de surface.
- Le revêtement de surface est appliqué sur la surface portante et dans les cavités, après formation des cavités.
- Le revêtement de surface est appliqué sur la surface portante, avant formation des cavités.
- Le traitement ou revêtement présente des propriétés physiques différentes du matériau métallique de base du corps.
- Le traitement ou revêtement est multicouche ou monocouche.
- Le revêtement est réalisé par dépôt physique en phase vapeur (PVD en anglais : "physical vapor déposition").
- Le revêtement est réalisé par dépôt chimique en phase vapeur (CVD en anglais : "chemical vapor déposition").
- Le revêtement est réalisé par projection à chaud.
- Le revêtement est réalisé par projection à froid.
- Le revêtement est projeté sous forme de poudre.
- Le revêtement est projeté sous forme de gouttes.
- Le revêtement est réalisé par projection thermique par flamme supersonique (HVOF en anglais : « High Velocity Oxy-Fuel »).
- Le revêtement est réalisé par chargement laser (« laser cladding » en anglais).
- Le revêtement est anti-grippage.
- Le revêtement comprend une couche externe de carbone amorphe type DLC (« diamond-like carbon » en anglais), notamment avec une épaisseur comprise entre 1 et 5 µm, par exemple 3 µm.
- Le revêtement comprend une couche externe en composite autolubrifiant, notamment à base de résine et/ou de renfort tissé ou non, comprenant par exemple des charges de type PTFE, MoS2 ou graphite.
- Le revêtement comprend un verni polymère.
- Le traitement est une nitruration. De préférence, l'alésage présente une couche de combinaison (couche blanche) ayant une épaisseur comprise notamment entre 5 et 50 µm, par exemple 20 µm.
- Le traitement est une cémentation. De préférence, la cémentation est réalisée sur une épaisseur comprise entre 0,5 et 4 mm, par exemple 2 mm.
- Le traitement est une trempe dans la masse.
- Le traitement est une trempe par induction, de préférence haute fréquence.
- L'alésage a une couche superficielle traitée contre le grippage sur une profondeur de diffusion inférieure ou égale à 0,6 mm, la couche superficielle présentant une dureté supérieure ou égale à 500 Hv1 sur une profondeur comprise entre 5 et 50 µm.
- La zone couvre tout l'alésage, à 360 degrés autour de l'axe longitudinal du corps.
- La zone s'étend dans l'alésage sur un secteur angulaire d'au moins 120 degrés autour de l'axe longitudinal du corps.
- Deux zones s'étendent dans l'alésage chacune sur un secteur angulaire d'au moins 120 degrés autour de l'axe longitudinal du corps. De préférence, les deux zones sont situées de part et d'autre de l'axe.
- La zone peut comporter des cavités de plusieurs types différents, ou d'un seul type.
- Les cavités ont une section circulaire.
- Les cavités ont une section alvéolaire.
- Les cavités présentent chacune une plus grande longueur ou un diamètre compris entre 2 et 15 mm, par exemple 6 mm.
- Les cavités ont une densité surfacique comprise entre 5 et 65%, cette densité surfacique étant définie comme le ratio de la surface non portante sur la surface portante, dans ladite zone incluant les cavités.
- Les cavités ne sont pas débouchantes latéralement sur les côtés du corps.

L'invention a également pour objet un système mécanique, comprenant un organe de guidage tel que mentionné ci-dessus, et un élément mobile en oscillation ou rotation dans cet organe de guidage.

L'invention a également pour objet un procédé de fabrication d'un organe de guidage d'un élément mobile en oscillation ou rotation, caractérisé en ce que le procédé comprend les étapes successives suivantes :
a) fabriquer un corps constitué d'un matériau métallique, muni d'un alésage pour le montage de l'élément mobile, comportant des cavités réparties de manière discontinue dans l'alésage et aptes à faire office de réserve de graisse, et comportant d'éventuels moyens d'alimentation en graisse ; dans l'alésage étant définies une surface portante hors des cavités et des moyens d'alimentation, et une surface non portante dans les cavités et les moyens d'alimentation ; l'alésage comportant au moins une zone avec des cavités ayant une profondeur comprise entre 2 et 5 mm ;
b) réaliser un traitement de durcissement sur l'alésage, au moins dans ladite zone ; et
c) appliquer de la graisse dans l'alésage, au moins dans ladite zone, avec une quantité de graisse dans les cavités par surface portante comprise entre 0,05 et 0,3 g / cm2 dans ladite zone.

Selon un mode de réalisation du procédé de fabrication, dans l'étape d'application de la graisse dans l'alésage, la quantité de graisse dans les cavités par surface portante est comprise entre 0,05 et 0,2 g / cm2.

### BREVE DESCRIPTION DES DESSINS

L'invention sera mieux comprise à la lecture de la description qui va suivre, donnée uniquement à titre d'exemple non limitatif et faite en référence aux dessins annexés sur lesquels :
[Fig 1] est une section axiale d'un système mécanique conforme à l'invention, comprenant une bague et un arbre logé dans la bague.
[Fig 2] est une vue à plus grande échelle du détail Il à la figure 1.
[Fig 3] est une section radiale de la bague selon la ligne III-III à la figure 1.
[Fig 4] est une section analogue à la figure 1, montrant une variante de bague conforme à l'invention, dépourvue de moyens d'alimentation en graisse.
[Fig 5] est une vue analogue à la figure 2, montrant une variante de cavité.
[Fig 6] est une vue analogue à la figure 2, montrant une autre variante de cavité.
[Fig 7] est une vue analogue à la figure 3, montrant une variante d'alésage.
[Fig 8] est une vue analogue à la figure 3, montrant une autre variante d'alésage.
[Fig 9] est une vue analogue à la figure 3, montrant une autre variante d'alésage.

### DESCRIPTION DETAILLEE DE L'INVENTION

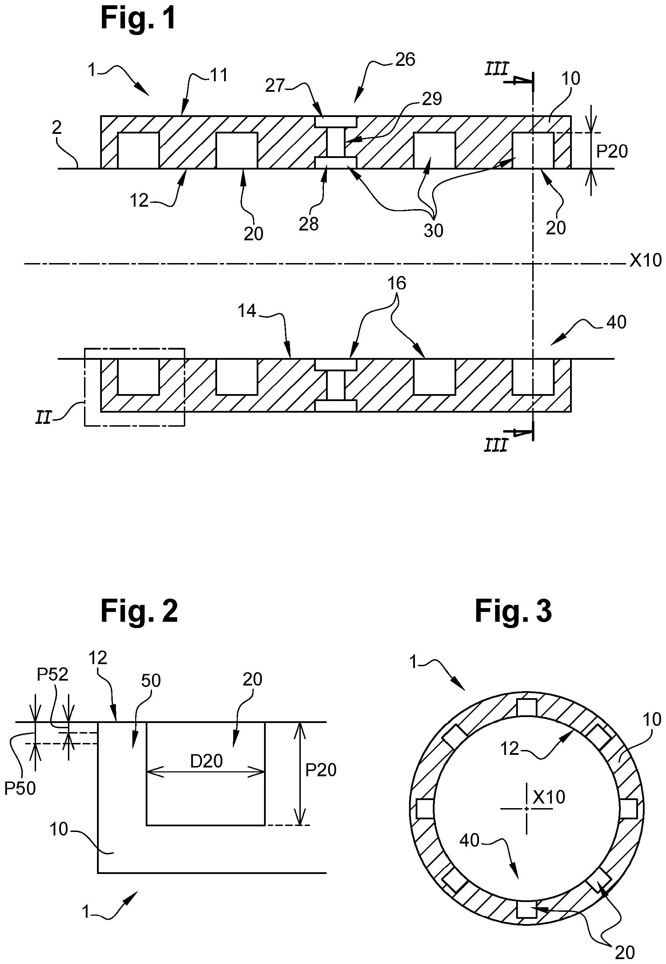

Les figures 1 à 3 montrent un système mécanique conforme à l'invention, comprenant une bague de guidage (1) également conforme à l'invention, et un arbre (2) mobile en oscillation ou rotation dans la bague (1).

La bague (1) comprend un corps (10) de forme tubulaire centré sur un axe longitudinal (X10). Le corps (10) a une surface cylindrique externe (11) et une surface cylindrique interne formant un alésage (12) prévu pour recevoir l'arbre (2). Le corps (10) est constitué d'un matériau métallique recevant un traitement de durcissement, par exemple une nitruration, une cémentation ou une trempe. De préférence, le corps (10) est réalisé en acier présentant une limite élastique Re comprise entre 200 et 600 MPa.

Le corps (10) comporte des cavités (20) réparties dans l'alésage (12) et aptes à faire office de réserve de graisse (30). Les cavités (20) sont réparties de manière discontinue dans l'alésage (12), c'est-à-dire qu'elles ne communiquent pas les unes avec les autres. De préférence, les cavités (20) sont réparties de manière régulière dans l'alésage (12), autour et/ou le long de l'axe (X10).

Les cavités (20) peuvent présenter tous types de formes. Par exemple, les cavités (20) peuvent présenter une section radiale circulaire, avec un diamètre (D20), et une section axiale rectangulaire, avec une profondeur (P20). En pratique, la profondeur (P20) est mesurée au fond de la cavité (20), au point le plus éloigné de la surface de l'alésage (12).

Le corps (10) comporte également des moyens d'alimentation (26) en graisse (30) de l'alésage (12). Par exemple, les moyens d'alimentation (26) comprennent une gorge annulaire (27) formée sur la surface externe (11), une gorge annulaire (28) formée dans l'alésage (12), et au moins un orifice (29) traversant le corps (10) entre les gorges (27, 28). Les gorges (27, 28) annulaires sont formées autour de l'axe (X10). De préférence, les moyens d'alimentation (26) comprennent plusieurs orifices (29) répartis autour de l'axe (X10), au nombre de deux, trois, quatre orifices (29) ou plus. Les moyens (26) et plus précisément la gorge (28) ne sont pas connectés aux cavités (20).

En alternative, les moyens d'alimentation (26) peuvent être dépourvus de gorge (27) externe. En effet, des essais ont démontré que la gorge (28) interne est suffisante pour assurer l'amenée de graisse (30) dans l'alésage (12).

Dans l'alésage (12), on définit une surface portante (14) hors des cavités (20) et des moyens d'alimentation (26), et une surface non portante (16) dans les cavités (20) et les moyens d'alimentation (26).

Selon l'invention, l'alésage (12) comprend au moins une zone (40) avec :
- une profondeur (P20) de cavités (20) comprise entre 2 et 5 mm, et
- un ratio entre la quantité de graisse (30) dans les cavités (20) divisée par la surface portante (14) compris entre 0,05 et 0,2 g / cm2.

La graisse (30) contenue dans les moyens d'alimentation (26) n'est pas prise en compte dans le calcul du ratio graisse (30) / surface portante (14).

Des essais réalisés par la Demanderesse ont montré que dans le cas d'une articulation fonctionnant en oscillation ou en rotation, la graisse (30) comprise dans la gorge (28) interne ne produit pas d'effet sur la lubrification de l'alésage (12) puisque cette gorge (28) n'est pas connectée aux cavités (20). En outre, cette gorge (28) participe à augmenter la pression de contact entre l'arbre (2) et la bague (1) en réduisant la surface portante (14).

Ces essais ont été réalisés dans les conditions suivantes :
- Bagues (1) de diamètre intérieur 80mm / diamètre extérieur 95mm / longueur 60mm
- Pression = 50MPa
- PV : 0.21MPa.m/s
- Graissage initial uniquement.
- Comparaison entre bagues (1) avec et sans gorge (28) de graissage interne.

La durée de vie des bagues (1) sans gorge (28) de graissage interne est deux fois supérieure aux bagues (1) avec gorge (28) de graissage interne.

Les résultats obtenus vont à l'encontre de certaines publications de l'état de la technique, affirmant que toute la graisse (30) contenue dans une bague (1) est "efficace", incluant la graisse (30) contenue dans les gorges (27, 28) interne et externe.

De préférence, la profondeur (P20) des cavités (20) dans la zone (40) est comprise entre 3 et 5 mm. Encore de préférence, la profondeur (P20) est égale à 4 mm.

Sur l'exemple des figures 1 à 3, la zone (40) couvre tout l'alésage (12), à 360 degrés autour de l'axe (X10) du corps (10). Autrement dit, tout l'alésage (12) est pourvu de cavités (20) ayant une profondeur (P20) comprise entre 2 et 5 mm.

De préférence, l'alésage (12) a une couche superficielle (50) traitée contre le grippage sur une profondeur de diffusion (P50) inférieure ou égale à 0,6 mm, la couche superficielle (50) présentant une dureté supérieure ou égale à 500 Hv1 sur une profondeur (P52) comprise entre 5 et 50 µm.

Deux campagnes d'essais ont été réalisées en faisant varier certains paramètres, tels que les dimensions de la bague (1), les dimensions des cavités (20), et le matériau de l'arbre (2).

S'agissant de la première compagne d'essais, la Table 1 présente les conditions d'essais utilisées pour cette campagne, tandis que les Tables 2 et 3 présentent différentes séries d'essais et les résultats obtenus.

**[Table 1]**

| | |
|---|---|
| Banc | Banc d'essai Grande Oscillation |
| Loi de Mouvement | Oscillation axe sinusoïdale |
| Amplitude d'oscillation | 90° |
| Graisse (type) | Graisse Extrême Pression |
| Graissage | Initial uniquement |
| | (pas de moyens d'alimentation (26) prévus dans la bague (1)) |
| Matière de la bague (1) | Acier (Re < 600 MPa) |
| Matière de l'arbre (2) | 16NC6 Cémenté Trempé |
| Critère d'arrêt | COF > 0,35 |
| | T° > 100°C |
| | Usure > 0,5mm |

**[Table 2]**

| **Bague Ø intérieur 30 mm** | **Conditions de test** | | **Quantité de graisse / surface portante (g/cm²)** | **Performance : nombre de cycles effectués jusqu'à grippage** | **Profondeur cavités** |
|---|---|---|---|---|---|
| | **P (MPa)** | **PV (MPa.m/s)** | | | |
| **Longueur 20 mm** | 100 | 0,1 | **0,039** | **15 000** | **4** |
| | 100 | 0,1 | **0,039** | 20 000 | **3** |
| | 100 | 0,1 | **0,051** | 50 000 | **4** |
| | 100 | 0,1 | 0,1 | 83 000 | 3 |
| | 100 | 0,1 | 0,133 | 92 000 | 4 |
| | 100 | 0,1 | 0,166 | 97 000 | 5 |
| | 100 | 0,1 | 0,2 | 95 000 | 6 |
| | 100 | 0,1 | 0,3 | 99 000 | 4 |
| | 100 | 0,1 | 0,391 | 35 000 | 4 |

Les résultats d'essais réalisés sur des dimensions de bagues plus importantes sont reportés dans la Table 3 ci-après.

**[Table 3]**

| **Bague Ø intérieur 80 inm** | **Conditions de test** | | **Quantité de graisse/surface portante (g/cm²)** | **Performance: nombre de cycles effectués jusqu'à grippaqe** | **Profondeur cavités** |
|---|---|---|---|---|---|
| | **P (MPa)** | **PV (MPa.m/s)** | | | |
| **Longueur 60 mm** | 50 | 0,21 | **0,036** | 70 000 | **2 mm** |
| | 50 | 0,21 | **0,057** | 110 000 | **3 mm** |
| | 50 | 0,21 | **0,091** | 164 000 | **4 mm** |
| | 50 | 0,21 | **0,144** | 300 000 | **4 mm** |

S'agissant de la deuxième compagne d'essais, la Table 4 présente les conditions d'essais utilisées pour cette campagne, tandis que la Table 5 présente une série d'essais et les résultats obtenus.

**[Table 4]**

| | |
|---|---|
| Banc | Banc d'essai Grande Oscillation |
| Loi de Mouvement | Oscillation axe sinusoïdale |
| Amplitude d'oscillation | 90° |
| Graisse (type) | Graisse Extrême Pression |
| Graissage | Initial uniquement |
| | (pas de moyens d'alimentation (26) prévus dans la bague (1)) |
| Matière de la bague (1) | Acier (Re < 600 MPa) |
| Matière de l'arbre (2) | 42CD4 QT + trempe HF avec revêtement Cr dur (acier trempé et revenu) |
| Critère d'arrêt | COF > 0,35 |
| | T° > 100°C |
| | Usure > 0,5mm |

**[Table 5]**

| | **Conditions de test** | | **Quantité de graisse / surface portante (g/cm²)** | **Performance: nombre de cycles effectués jusqu'à grippage** | **Profondeur cavités** |
|---|---|---|---|---|---|
| | **P (MPa)** | **PV (MPa.m/s)** | | | |
| **Bague Ø intérieur 30 mm** | **100** | **0,1** | **0,039** | 27 000 | **4** |
| | **100** | **0,1** | **0,039** | 39 500 | **3** |
| **Longueur 20 mm** | 100 | 0,1 | **0,051** | 84 000 | **4** |
| | 100 | 0,1 | **0,133** | 135 000 | **4** |
| | 100 | 0,1 | **0,2** | 144 300 | **6** |
| | 100 | 0,1 | **0,2** | 180 000 | **4** |
| | 100 | 0,1 | **0,3** | 140 000 | **4** |
| | 100 | 0,1 | **0,391** | 55 000 | **4** |

Selon les résultats des deux compagnes d'essais, on remarque que les performances, qui correspondent au nombre de cycles avant grippage, sont maximales pour une quantité de graisse par surface portante comprise entre 0,05 g/cm2 et 0,3 g/cm2, et tout particulièrement entre 0,05 g/cm2 et 0,2 g/cm2.

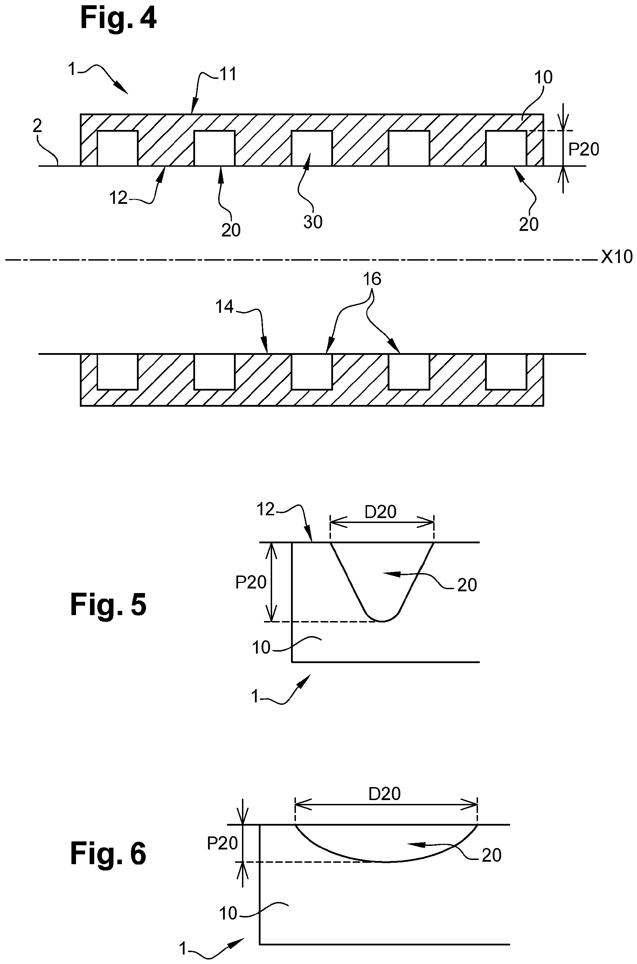

D'autres modes de réalisation d'un organe de guidage (1) conforme à l'invention sont montrés aux figures 4 à 9. Certains éléments constitutifs de l'organe (1) sont comparables à ceux du premier mode de réalisation décrit plus haut et, dans un but de simplification, portent les mêmes références numériques.

La figure 4 montre un organe de guidage (1) comportant des cavités (20) mais dépourvu de moyens d'alimentation en graisse (30). Dans l'alésage (12), on définit la surface portante (14) hors des cavités (20) et la surface non portante (16) dans les cavités (20).

La figure 5 montre une cavité (20) ayant un diamètre (D20) inférieur à la profondeur (P20).

La figure 6 montre une cavité (20) ayant un diamètre (D20) supérieur à la profondeur (P20).

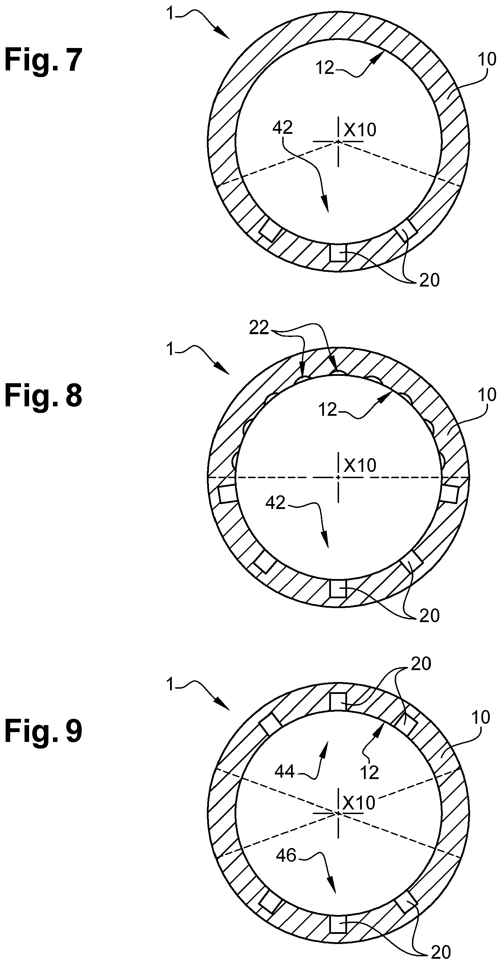

La figure 7 montre un alésage (12) comportant une zone (42) s'étendant (12) sur un secteur angulaire de 120 degrés autour de l'axe longitudinal (X10). L'alésage (12) est pourvu de cavités (20) ayant une profondeur (P20) comprise entre 2 et 5 mm seulement dans cette zone (42). En dehors de la zone (42), l'alésage (12) est dépourvu de cavités faisant office de réserve de graisse (30).

La figure 8 montre un alésage (12) comportant une zone (42) s'étendant (12) sur un secteur angulaire de 180 degrés autour de l'axe longitudinal (X10). L'alésage (12) est pourvu de cavités (20) ayant une profondeur (P20) comprise entre 2 et 5 mm seulement dans cette zone (42). En dehors de la zone (42), l'alésage (12) est pourvu de cavités (22) faisant office de réserve de graisse (30) et ayant une profondeur inférieure à 2 mm, par exemple 1 mm. Ces cavités (22) ne sont pas prises en compte pour le calcul du ratio graisse (30) / surface portante (14) dans la zone (42).

La figure 9 montre un alésage (12) comportant deux zones (44, 46) s'étendant chacune sur un secteur angulaire de 120 degrés autour de l'axe longitudinal (X10). Les zones (44, 46) sont situées en opposition de part et d'autre de l'axe (X10).

Par ailleurs, l'organe de guidage (1) peut être conformé différemment des figures 1 à 9 sans sortir du cadre de l'invention, tel que défini par les revendications. En outre, les caractéristiques techniques des différents modes de réalisation et variantes mentionnés ci-dessus peuvent être, en totalité ou pour certaines d'entre elles, combinées entre elles. Ainsi, l'organe de guidage (1) peut être adapté en termes de coût, de fonctionnalités et de performance.

## Revendications

1. Organe de guidage (1) d'un élément (2) mobile en oscillation ou rotation, comprenant un corps (10) constitué d'un matériau métallique avec traitement de durcissement, muni d'un alésage (12) pour le montage de l'élément (2) mobile, comportant des cavités (20) réparties de manière discontinue dans l'alésage (12) et aptes à faire office de réserve de graisse (30), et comportant d'éventuels moyens d'alimentation (26) en graisse (30) ; dans l'alésage (12) étant définies une surface portante (14) hors des cavités (20) et des moyens d'alimentation (26), et une surface non portante (16) dans les cavités (20) et les moyens d'alimentation (26) ; ***caractérisé en ce que*** l'alésage (12) comprend au moins une zone (40 ; 42 ; 44, 46) avec des cavités (20) ayant une profondeur (P20) comprise entre 2 et 5 mm, et une quantité de graisse (30) dans les cavités (20) par surface portante (14) comprise entre 0,05 et 0,3 g / cm2.

2. Organe de guidage (1) selon la revendication 1, **caractérisé en ce que** la quantité de graisse (30) dans les cavités (20) par surface portante (14) est comprise entre 0,05 et 0,2 g / cm2.

3. Organe de guidage (1) selon la revendication 1 ou la revendication 2, **caractérisé en ce que** la profondeur (P20) des cavités (20) dans la zone (40) est comprise entre 3 et 5 mm, de préférence égale à 4 mm.

4. Organe de guidage (1) selon l'une quelconque des revendications précédentes, **caractérisé en ce que** l'alésage (12) comporte un revêtement de surface.

5. Organe de guidage (1) selon l'une quelconque des revendications précédentes, **caractérisé en ce que** l'alésage (12) a une couche superficielle (50) traitée contre le grippage sur une profondeur de diffusion (P50) inférieure ou égale à 0,6 mm, la couche superficielle (50) présentant une dureté supérieure ou égale à 500 Hv1 sur une profondeur (P52) comprise entre 5 et 50 µm.

6. Organe de guidage (1) selon l'une quelconque des revendications précédentes, **caractérisé en ce que** le matériau métallique du corps (10) présente une limite élastique Re comprise entre 200 et 600 MPa.

7. Organe de guidage (1) selon l'une quelconque des revendications 1 à 6, **caractérisé en ce que** la zone (40) couvre tout l'alésage (12), à 360 degrés autour de l'axe longitudinal (X10) du corps (10).

8. Organe de guidage (1) selon l'une quelconque des revendications 1 à 6, **caractérisé en ce que** la zone (42) s'étend dans l'alésage (12) sur un secteur angulaire d'au moins 120 degrés autour de l'axe longitudinal (X10) du corps (10).

9. Organe de guidage (1) selon l'une quelconque des revendications 1 à 6, **caractérisé en ce que** deux zones (44, 46) s'étendent dans l'alésage (12) chacune sur un secteur angulaire d'au moins 120 degrés autour de l'axe longitudinal (X10) du corps (10).

10. Système mécanique, comprenant un organe de guidage (1) selon l'une des revendications précédentes, et un élément (2) mobile en oscillation ou rotation dans l'alésage (12) de cet organe de guidage (1).

11. Procédé de fabrication d'un organe de guidage (1) d'un élément (2) mobile en oscillation ou rotation, **caractérisé en ce que** le procédé comprend les étapes successives suivantes :
a) fabriquer un corps (10) constitué d'un matériau métallique, muni d'un alésage (12) pour le montage de l'élément (2) mobile, comportant des cavités (20) réparties de manière discontinue dans l'alésage (12) et aptes à faire office de réserve de graisse (30), et comportant d'éventuels moyens d'alimentation (26) en graisse (30) ;
dans l'alésage (12) étant définies une surface portante (14) hors des cavités (20) et des moyens d'alimentation (26), et une surface non portante (16) dans les cavités (20) et les moyens d'alimentation (26) ;
l'alésage (14) comportant au moins une zone (40 ; 42 ; 44, 46) avec des cavités (20) ayant une profondeur (P20) comprise entre 2 et 5 mm ;
b) réaliser un traitement de durcissement sur l'alésage (12), au moins dans ladite zone (40 ; 42 ; 44, 46) ;
c) appliquer de la graisse (30) dans l'alésage (12), au moins dans ladite zone (40 ; 42 ; 44, 46), avec une quantité de graisse (30) dans les cavités (20) par surface portante (14) comprise entre 0,05 et 0,3 g / cm2 dans ladite zone (40 ; 42 ; 44, 46).

12. Procédé de fabrication selon la revendication 11, **caractérisé en ce que** dans l'étape d'application de la graisse (30) dans l'alésage (12), la quantité de graisse (30) dans les cavités (20) par surface portante (14) est comprise entre 0,05 et 0,2 g / cm2.

## Patentansprüche

1. Führungselement (1) für ein schwingendes oder rotierendes bewegliches Element (2), bestehend aus einem Körper (10) aus einem metallischen Material mit einer Härtungsbehandlung, versehen mit einer Bohrung (12) zur Montage des beweglichen Elements (2), die diskontinuierlich verteilte Hohlräume (20) in der Bohrung (12) aufweist, die als Fettreservoirs (30) dienen können, und optional Fettzufuhreinrichtungen (26) umfassen; in der Bohrung (12) ist eine tragende Fläche (14) außerhalb der Hohlräume (20) und der Zufuhreinrichtungen (26) definiert, sowie eine nicht-tragende Fläche (16) in den Hohlräumen (20) und den Zufuhreinrichtungen (26); **gekennzeichnet dadurch, dass** die Bohrung (12) zumindest einen Bereich (40; 42; 44, 46) mit Hohlräumen (20) aufweist, deren Tiefe (P20) zwischen 2 und 5 mm liegt und die Menge an Fett (30) in den Hohlräumen (20) pro tragende Fläche (14) zwischen 0,05 und 0,3 g/cm² liegt.

2. Führungselement (1) gemäß Anspruch 1, **gekennzeichnet dadurch, dass** die Menge an Fett (30) in den Hohlräumen (20) pro tragende Fläche (14) zwischen 0,05 und 0,2 g/cm² liegt.

3. Führungselement (1) gemäß Anspruch 1 oder Anspruch 2, **gekennzeichnet dadurch, dass** die Tiefe (P20) der Hohlräume (20) in dem Bereich (40) zwischen 3 und 5 mm liegt, vorzugsweise gleich 4 mm.

4. Führungselement (1) gemäß einem der vorhergehenden Ansprüche, **gekennzeichnet dadurch, dass** die Bohrung (12) eine Oberflächenbeschichtung aufweist.

5. Führungselement (1) gemäß einem der vorhergehenden Ansprüche, **gekennzeichnet dadurch, dass** die Bohrung (12) eine oberflächliche Schicht (50) aufweist, die gegen Festfressen behandelt ist, mit einer Diffusionstiefe (P50) von höchstens 0,6 mm, wobei die oberflächliche Schicht (50) eine Härte von mindestens 500 Hv1 aufweist in einer Tiefe (P52) von 5 bis 50 µm.

6. Führungselement (1) gemäß einem der vorhergehenden Ansprüche, **gekennzeichnet dadurch, dass** das metallische Material des Körpers (10) eine Streckgrenze Re von 200 bis 600 MPa aufweist.

7. Führungselement (1) gemäß einem der Ansprüche 1 bis 6, **gekennzeichnet dadurch, dass** der Bereich (40) die gesamte Bohrung (12) umfasst, 360 Grad um die Längsachse (X10) des Körpers (10) herum.

8. Führungselement (1) gemäß einem der Ansprüche 1 bis 6, **gekennzeichnet dadurch, dass** der Bereich (42) sich in der Bohrung (12) über einen Winkelbereich von mindestens 120 Grad um die Längsachse (X10) des Körpers (10) erstreckt.

9. Führungselement (1) gemäß einem der Ansprüche 1 bis 6, **gekennzeichnet dadurch, dass** zwei Bereiche (44, 46) sich jeweils in der Bohrung (12) über einen Winkelbereich von mindestens 120 Grad um die Längsachse (X10) des Körpers (10) erstrecken.

10. Mechanisches System, umfassend ein Führungselement (1) gemäß einem der vorhergehenden Ansprüche und ein schwingendes oder rotierendes bewegliches Element (2) in der Bohrung (12) dieses Führungselements (1).

11. Verfahren zur Herstellung eines Führungselements (1) für ein schwingendes oder rotierendes bewegliches Element (2), **gekennzeichnet durch** die folgenden aufeinanderfolgenden Schritte:
a) Herstellung eines Körpers (10) aus einem metallischen Material, versehen mit einer Bohrung (12) zur Montage des beweglichen Elements (2), die diskontinuierlich verteilte Hohlräume (20) in der Bohrung (12) aufweist, die als Fettreservoirs (30) dienen können, und optional Fettzufuhreinrichtungen (26) umfassen;
in der Bohrung (12) ist eine tragende Fläche (14) außerhalb der Hohlräume (20) und der Zufuhreinrichtungen (26) definiert, sowie eine nicht-tragende Fläche (16) in den Hohlräumen (20) und den Zufuhreinrichtungen (26);
die Bohrung (14) umfasst zumindest einen Bereich (40; 42; 44, 46) mit Hohlräumen (20), deren Tiefe (P20) zwischen 2 und 5 mm liegt;
b) Durchführung einer Härtungsbehandlung an der Bohrung (12), zumindest in dem genannten Bereich (40; 42; 44, 46);
c) Aufbringen von Fett (30) in der Bohrung (12), zumindest in dem genannten Bereich (40; 42; 44, 46), mit einer Menge an Fett (30) in den Hohlräumen (20) pro tragende Fläche (14) zwischen 0,05 und 0,3 g/cm² in dem genannten Bereich (40; 42; 44, 46).

12. Herstellungsverfahren gemäß Anspruch 11, **gekennzeichnet dadurch, dass** bei dem Schritt des Aufbringens von Fett (30) in der Bohrung (12) die Menge an Fett (30) in den Hohlräumen (20) pro tragende Fläche (14) zwischen 0,05 und 0,2 g/cm² liegt.

## Claims

1. Guiding element (1) of a mobile element (2) in oscillation or rotation, comprising a body (10) made of a metallic material with hardening treatment, provided with a bore (12) for mounting the mobile element (2), having discontinuously distributed cavities (20) in the bore (12) capable of serving as grease reservoirs (30), and optionally having grease supply means (26); within the bore (12), a load-bearing surface (14) is defined outside the cavities (20) and the supply means (26), and a non-load-bearing surface (16) is present in the cavities (20) and the supply means (26); **characterized in that** the bore (12) comprises at least one zone (40; 42; 44, 46) with cavities (20) having a depth (P20) ranging from 2 to 5 mm, and an amount of grease (30) in the cavities (20) per load-bearing surface (14) ranging from 0.05 to 0.3 g/cm2.

2. Guiding element (1) according to claim 1, **characterized in that** the amount of grease (30) in the cavities (20) per load-bearing surface (14) is between 0.05 and 0.2 g/cm2.

3. Guiding element (1) according to claim 1 or claim 2, **characterized in that** the depth (P20) of the cavities (20) in the zone (40) is between 3 and 5 mm, preferably equal to 4 mm.

4. Guiding element (1) according to any one of the preceding claims, **characterized in that** the bore (12) has a surface coating.

5. Guiding element (1) according to any one of the preceding claims, **characterized in that** the bore (12) has a surface layer (50) treated against seizure to a diffusion depth (P50) of less than or equal to 0.6 mm, wherein the surface layer (50) has a hardness greater than or equal to 500 Hv1 at a depth (P52) ranging from 5 to 50 µm.

6. Guiding element (1) according to any one of the preceding claims, **characterized in that** the metallic material of the body (10) has a yield strength Re ranging from 200 to 600 MPa.

7. Guiding element (1) according to any one of claims 1 to 6, **characterized in that** the zone (40) covers the entire bore (12), 360 degrees around the longitudinal axis (X10) of the body (10).

8. Guiding element (1) according to any one of claims 1 to 6, **characterized in that** the zone (42) extends within the bore (12) over an angular sector of at least 120 degrees around the longitudinal axis (X10) of the body (10).

9. Guiding element (1) according to any one of claims 1 to 6, **characterized in that** two zones (44, 46) extend within the bore (12), each over an angular sector of at least 120 degrees around the longitudinal axis (X10) of the body (10).

10. Mechanical system comprising a guiding element (1) according to any of the preceding claims, and a mobile element (2) in oscillation or rotation in the bore (12) of said guiding element (1).

11. Method for manufacturing a guiding element (1) for a mobile element (2) in oscillation or rotation, **characterized in that** the method comprises the following successive steps:
a) manufacturing a body (10) made of a metallic material, provided with a bore (12) for mounting the mobile element (2), having discontinuously distributed cavities (20) in the bore (12) capable of serving as grease reservoirs (30), and optionally having grease (30) supply means (26);
within the bore (12), a load-bearing surface (14) is defined outside the cavities (20) and the supply means (26), and a non-load-bearing surface (16) is present in the cavities (20) and the supply means (26);
the bore (14) comprising at least one zone (40; 42; 44, 46) with cavities (20) having a depth (P20) ranging from 2 to 5 mm;
b) performing a hardening treatment on the bore (12), at least in said zone (40; 42; 44, 46);
c) applying grease (30) in the bore (12), at least in said zone (40; 42; 44, 46), with an amount of grease (30) in the cavities (20) per load-bearing surface (14) ranging from 0.05 to 0.3 g/cm2 in said zone (40; 42; 44, 46).

12. Manufacturing method according to claim 11, **characterized in that** in the step of applying grease (30) in the bore (12), the amount of grease (30) in the cavities (20) per load-bearing surface (14) is between 0.05 and 0.2 g/cm2.
